# EUROPEAN PATENT APPLICATION

(11) **EP 1 063 593 A1**
(43) Date of publication of application: **27.12.2000**
(21) Application number: 99939226.9
(22) Date of filing: 12.03.1999
(51) Int. Cl.: G06F 13/16, G06F 13/36

(54) **BUS SELECTOR AND INTEGRATED CIRCUIT SYSTEM**

(30) Priority: 12.03.1998 JP 6086898; 28.12.1998 JP 37343698
(71) Applicant: MATSUSHITA ELECTRIC INDUSTRIAL CO., LTD., Kadoma-shi, Osaka 571-8501 (JP)
(72) Inventor: MARUYAMA, Takafumi, Kadoma-shi Osaka 571-0074 (JP); AKAMATSU, Hironori, Hirakata-shi Osaka 573-1105 (JP); HIRATA, Takashi, Neyagawa-shi Osaka 572-0089 (JP)
(74) Representative: Grünecker, Kinkeldey, Stockmair & Schwanhäusser Anwaltssozietät
(86) International application number: JP9901198
(87) International publication number: WO9946685

(57) **Abstract**

The bus selector device **3** is arranged independent of the master chip **1** and substantially at the same distance from the master chip **1** and the slave chips **2a** to **2c**. In the transmission of data and commands, the master chip **1** outputs a connection information signal indicating the connection of the buses B and Ba to Bc among the chips **1** and **2a** to **2c** to the bus selector device **3**. Based on the connection information signal, the bus selector device 3 switches and selects among the bus connections of the chips **1** and **2a** to **2c**. Consequently, the buses among the chips **1** and **2a** to **2c** have an equal and short length, realizing a high-speed data transmission among these chips. In addition, the number of pins in the master chip **1** can be reduced.

## Description

### TECHNICAL FIELD

The present invention relates to a bus selector device which switches and selects among a plurality of buses connecting a plurality of chips, and also to a semiconductor integrated circuit system provided with the bus selector device.

### BACKGROUND ART

With the rapid growth of an information society in recent years, there is an increase in demand for semiconductor circuit system which can process large amounts of data at high speed. Processing high volumes of data at high speed requires a number of storage devices (memory devices) and high-speed data transmission with little loss.

From these viewpoints, one conventional approach is to connect a plurality of semiconductor memory devices such as DRAM devices in sequence; however, this solution increases the bus lengths between the memory controller which controls the devices and those arranged far from the controller. The long buses increase the delay in signal transmission, thereby damaging the high-speed data transmission. Moreover, the control of the plurality of memory devices to achieve high-capacity semiconductor memory makes the buses between the memory controller and the memory devices differ in length from each other. As a result, the speed in the signal transmission differs from one bus to another, making it impossible to compensate clock skew between the memory controller and each memory device. In high-speed clock operations, there may be cases where stable high-speed operations cannot be secured In the system.

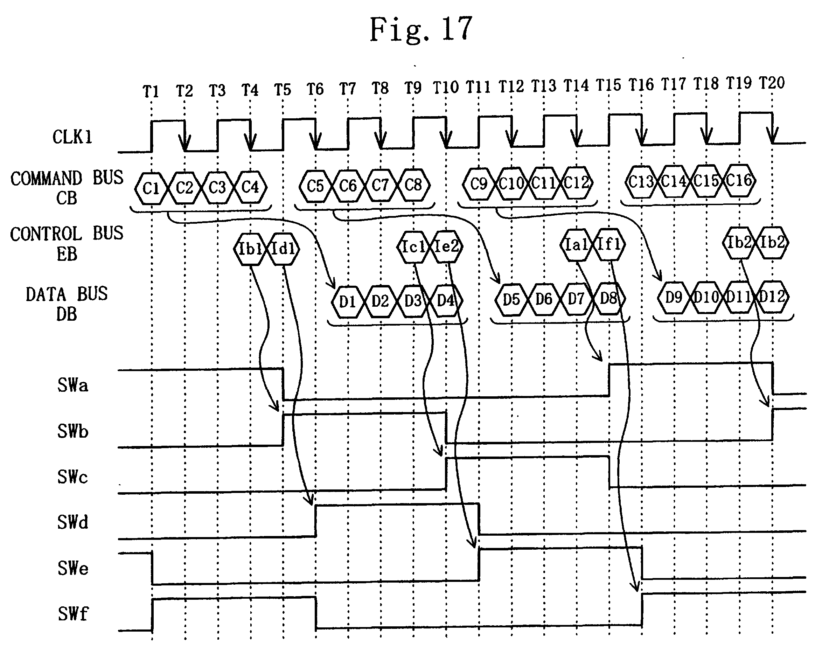

In order to overcome this problem, conventional semiconductor integrated circuit systems have achieved high-speed data transmission while compensating clock skew by reducing a delay in signal transmission as a result of shortening the bus length between the memory controller and each memory device. One such semiconductor integrated circuit system has been disclosed in U.S. Patent 5,408,129 by Rambus. In this system, the distance between the memory controller and each memory device is shortened as shown in Figures **17 (a)** and **17 (b)** to achieve high-speed stable operation, and when a large number of memory devices are connected, the memory controller to be installed in the master chip is provided with a plurality of channels to control the memory devices.

### PROBLEMS TO BE SOLVED

However, in the above-mentioned conventional semiconductor integrated circuit systems, the serial connection of the memory devices increases the bus length between the memory controller unit and the farthest memory device as more memory devices are arranged. This causes a delay in signal transmission between the memory controller unit and each of the nearest memory device and the farthest memory device. This delay makes it impossible to secure the stable high-speed operations of the system when high-frequency clock signals are transmitted Moreover, the provision of the plurality of channels in the memory controller unit undesirably increases the number of pins in the unit, which increases the package size, thereby to raise the fabrication cost.

### SUMMARY OF THE INVENTION

The object of the present invention is, in a semiconductor integrated circuit system, to realize a high-speed efficient control of the semiconductor memory devices by reducing variations in bus length among the devices without increasing the number of pins in the memory controller unit and the like.

In order to achieve the object, according to the present invention, a bus selector device which switches and selects among buses to semiconductor memory devices is arranged aside from the semiconductor memory devices so that a plurality of chips such as the semiconductor memory devices transmit and receive signals to and from each other.

The semiconductor integrated circuit system of the present invention is a semiconductor integrated circuit system having a plurality of chips and making said plurality of chips transmit and receive signals to and from each other, comprising a bus selector device connected to said plurality of chips via a plurality of buses, said bus selector device receiving connection information among said plurality of chips and selecting among connections of said plurality of buses in accordance with the connection information.

Furthermore, the semiconductor integrated circuit system of the present invention is a semiconductor integrated circuit system having at least a master chip and a plurality of slave chips, comprising: a bus selector device which is connected to said master chip and said plurality of slave chips with a plurality of buses and which selects among connections of said plurality of buses, said bus selector device being arranged substantially at a same distance from said plurality of slave chips.

In the present invention, since the bus selector device is arranged independent of the master chip, it reduces the number of pins in the master chip. Furthermore, the bus selector device is arranged at substantially the same distance from the slave chips because the arrangement is free. Consequently, the bus lengths between the master chip and the slave chips can be approximately equal and short, which realizes the high-speed data transmission among the master and slave chips and the storage of high-volume data in the slave chips.

In the semiconductor integrated circuit system of the present invention, it is preferable that said bus selector device comprises switch means for switching among the connections of said plurality of buses, and determination means for determining the connection information among said plurality of chips received, and for outputting a switch signal in accordance with determination results to said switch means.

It is also preferable that said bus selector device comprises latch means for holding signals to be transmitted to or received from said plurality of chips to adjust timings of signal transmission and reception.

Said plurality of chips preferably include at least one master chip and a plurality of slave chips.

Said master chip may output the connection information among said plurality of chips to said bus selector device; and said master chip and said bus selector device may be connected to each other with a single bus, said single bus carrying the connection information among said plurality of chips.

It is also possible that said master chip outputs the connection information among said plurality of chips to said bus selector device; and said master chip and said bus selector device are connected to each other with two or more buses, one of said two or more buses carrying the connection information among said plurality of chips.

Said two or more buses may include a command bus which is also used as a connection information bus to carry the connection information among said plurality of chips.

Said one of said two or more buses to carry the connection information among said plurality of chips may be a specifically designed connection information bus.

The connection information among said plurality of chips may be composed of a packet.

It is preferable that said bus selector device is arranged substantially at a same distance from said master chip and said plurality of salve chips.

Said plurality of slave chips may be memory.

The bus selector device of the present invention, which is connected to a plurality of chips with a plurality of buses and selects among connections of said plurality of buses, comprises: switch means for switching among the connections of said plurality of buses; and determination means for receiving and determining connection information among said plurality of chips, and for outputting a switch signal in accordance with determination results to said switch means.

The bus selector device of the present invention preferably further comprises: control signal input means for receiving a control signal from one of said plurality of chips for another chip; and control signal output means for outputting said control signal to at least one of said plurality of chips through one of said plurality of buses selected by switching of said switch means.

Furthermore, the bus selector device of the present invention preferably comprises: data input means for receiving data from one of said plurality of chips; and data output means for outputting said data to at least one of said plurality of chips through one of said plurality of buses selected by switching of said switch means.

It is also preferable that the bus selector device of the present invention further comprises a plurality of internal buses connected to said plurality of buses, said plurality of internal buses each being provided with latch means.

### BRIEF DESCRIPTION OF THE DRAWINGS

Figure **1** is a block diagram showing the entire structure of the semiconductor integrated circuit system of the first embodiment of the present invention.
Figure **2** is a diagram showing the structure of the determination circuit provided in the semiconductor integrated circuit system of the first embodiment.
Figures **3 (a)**, **3(b)** and **3(c)** respectively show the structure of the selector circuit, the structure of the latch circuit, and determination results for entered commands in the semiconductor integrated circuit system of the first embodiment.
Figure **4** is a diagram showing an example of each timing of entering commands and outputting data in the semiconductor integrated circuit system of the first embodiment.
Figure **5** is a diagram showing the structure of the command packet used in the semiconductor integrated circuit system of the first embodiment.
Figure **6** is a diagram showing an example of each timing of entering commands, switching buses and outputting data in the semiconductor integrated circuit system of the first embodiment.
Figure **7** is a diagram showing another example of these timings.
Figure **8** is a block diagram showing the entire structure of the semiconductor integrated circuit system of the second embodiment of the present invention.
Figure **9** is a diagram showing the structure of the selection circuit provided in the semiconductor integrated circuit system of the second embodiment.
Figure **10** is a diagram showing the structure of the determination circuit provided in the semiconductor integrated circuit system of the second embodiment.
Figures **11 (a)** and **11(b)** respectively show the structure of the command bus selector circuit and the structure of the data bus selector circuit provided in the semiconductor integrated circuit system of the second embodiment.
Figure **12** is a diagram showing the structure of the command packet used in the semiconductor integrated circuit system of the second embodiment.
Figure **13** is a diagram showing determination results for the entering of the command packet.
Figure **14** is a block diagram showing the entire structure of the semiconductor integrated circuit system of the third embodiment of the present invention.
Figure **15** is a diagram showing the structure of the command packet used in the semiconductor integrated circuit system of the third embodiment.
Figure **16** is a diagram showing an example of each timing of entering commands, switching buses and outputting data in the semiconductor integrated circuit system of the second embodiment.
Figure **17** is a diagram showing an example of each timing of entering commands, switching buses and outputting data in the semiconductor integrated circuit system of the third embodiment.
Figure **18** is a diagram showing a modified example of the selector circuit provided in the semiconductor integrated circuit system of the present invention.
Figure **19** is a diagram showing another example of each timing of entering commands, switching buses and outputting data in the semiconductor integrated circuit system of the third embodiment.
Figure **20** is a block diagram showing the entire structure of the semiconductor integrated circuit system of the fourth embodiment of the present invention.

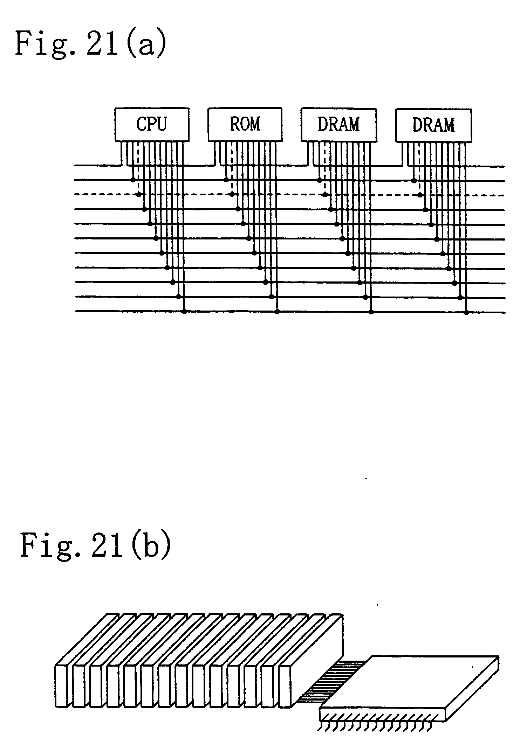

Figures **21 (a)** and **21 (b)** are diagrams showing the entire rough structures of the conventional semiconductor integrated circuit system.

### BEST MODE FOR CARRYING OUT THE INVENTION

### EMBODIMENT 1

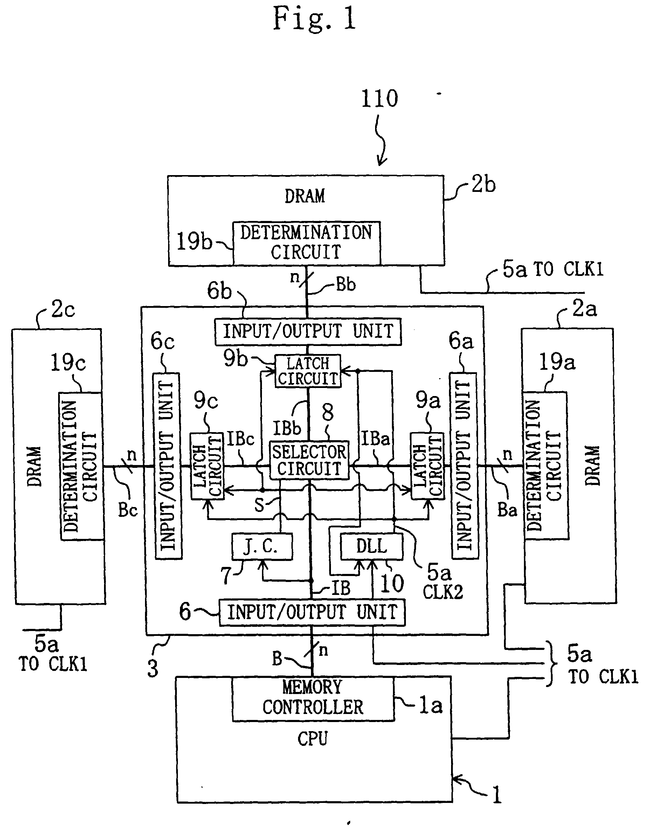

Figure **1** shows the semiconductor integrated circuit system **110** of the first embodiment. The system **110** in the present embodiment comprises a CPU as master chip **1**, and first, second and third DRAM chips as slave chips **2a**, **2b** and **2c**.

In the system **110**, a bus selector device **3** is connected to the mater chip **1** and slave chips **2a**, **2b** and **2c** via buses (transmission paths) B, Ba, Bb and Bc, respectively. The master chip **1** comprises a memory controller 1a which transmits and receives data to and from the slave chips **2a** to **2c**. The memory controller **1a** outputs commands to control the slave chips **2a** to **2c** by a packet mode. The single bus (transmission path) B connecting the bus selector device **3** and the master chip **1** has a width of plural bits (for example, 8 bits) to carry commands and data. The buses Ba to Bc respectively connecting the bus selector device **3** and the slave chips **2a** to **2c** also carry commands and data. It can be appropriately determined whether the bus selector device **3** is integrated into one chip with the master chip **1** or without the chip **1**.

The bus selector device **3** comprises four input/output units **6** and **6a** to **6c**, a determination circuit (determination means) **7**, a selector circuit (selector means) **8**, latch circuits (latch means) **9a** to **9c** and clock phase adjustment circuit (DLL) **10**. The input/output units **6** and **6a** to **6c** transmit and receive commands and data to and from the master chip **1** and the slave chips **2a** to **2c** via the buses B and Ba to Bc, respectively. The determination circuit **7** receives a command from the master chip **1** through the input/output unit **6**, determines which of the slave chips **2a** to **2c** the command is bound for from the ID information in the command and outputs the determination results. The selector circuit **8** receives the determination results and switches the bus connections between the master chip **1** and the slave chips **2a** to **2c**, based on the determination results. The latch circuits **9a** to **9c** arranged on respective internal buses IB and IBa to IBc in the bus selector device **3** latch commands outputted from the master chip **1** and data outputted from the slave chips **2a** to **2c**. The clock phase adjustment circuit **10** generates a clock CLK2.

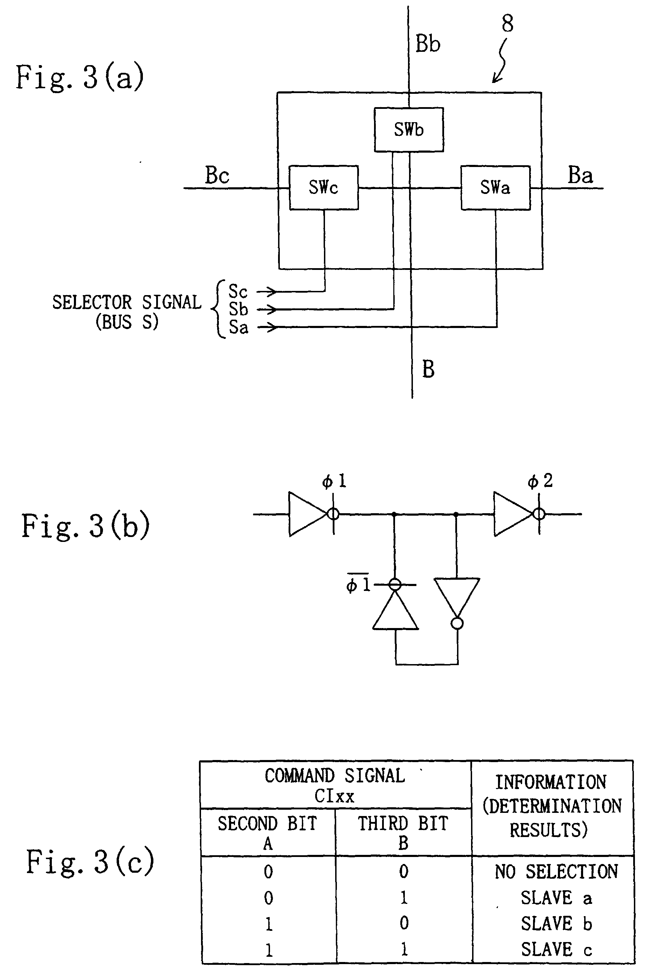

The selector circuit **8** is arranged on a point of intersection of the internal buses IB and IBa to IBc which connect the four input/output unit **6** and **6a** to **6c**, that is, on a point of intersection of the buses B and Ba to Bc which connect the master chip **1** and the slave chips **2a** to **2c** so as to reduce the lengths of the transmission paths between the master chip **1** and the slave chips **2a** to **2c**. The selector circuit **8** has a decode function to select one from among the buses B and Ba to Bc based on a signal received from the determination circuit **7** via the bus S, and a latch function to hold the selection of the bus until the next bus is selected. Figure **3 (a)** shows the rough structure of the selector circuit **8**, which includes selector switches SWa, SWb and SWc corresponding to the slave chips **2a**, **2b** and **2c**, respectively. The selector circuit **8** receives a selector signal Sa, Sb or Sc from the determination circuit **7** and activates the selector switch SWa, SWb or SWc on the bus between the master chip **1** and the selected slave chip to make these chips transmit commands and data to each other. Changing the contents of the selector signals Sa, Sb and Sc makes it possible to activate more than one selector switch at the same time, thereby to transmit commands to more than one slave chip at the same time.

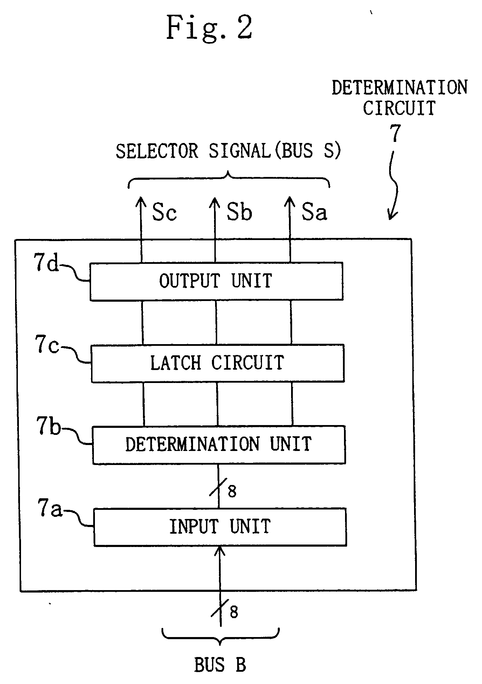

Figure **2** shows the internal structure of the determination circuit **7**. As shown in the structure, the determination circuit **7** comprises an input unit **7a** which receives commands from the bus B, a determination unit **7b** which analyzes the received commands, a latch circuit **7c** which holds the determination results of the determination unit **7b** until it receives the next determination results, and an output unit **7b** which outputs the determination results transferred from the latch circuit **7c**. The behavior of the determination circuit **7** will be roughly described as follows. The determination unit **7b** generates the selector signal Sa, Sb or Sc activating the selector switch SWa, SWb or SWc, respectively, from the two higher order bits of a packet-mode command that the input unit **7a** has received. To be more specific, as shown in Figure **3 (c)**, the determination unit **7b** decodes the two higher order bits "01", "10" and "11" of the command so as to activate the respective selector switches SWa, SWb and SWc which correspond to the slave chips **2a**, **2b** and **2c** by generating the respective selector signals Sa, Sb and Sc. The selector signal Sa, Sb or Sc generated in the determination unit **7b** is maintained as it is in the latch circuit **7c** until the next selector signal is generated. The output unit **7d** receives the selector signal Sa, Sb or Sc from the latch circuit **7c** and outputs it to the selector circuit **8**. The determination circuit **7** can be arranged either independently as shown in Figure **1** or inside the selector circuit **8**. The selector signals Sa, Sb and Sc generated in the determination unit **7b** can be transmitted either via the transmission paths having plural bits as shown in Figure **2**, or via fewer transmission paths by serial-parallel converting the signals.

The latch circuits **9a** to **9c** are arranged on the internal buses BIa to BIc, which are between the selector circuit **8** and the input/output units **6a** to **6c**, respectively, and have a bi-directional structure to receive commands from the master chip **1** via the selector circuit **8** and to output them to the slave chips **2a** to **2c**, and also to receive data from the slave chips **2a** to **2c** and to output them to the selector circuit **8**. The latch circuits **9a** to **9c** include respective delay circuits (not shown) to delay the selector signals Sa to Sc outputted on the bus S from the determination circuit **7** by a predetermined time period. Furthermore, as shown in Figure **3 (b)**, the latch circuits **9a** to **9c**, which can be composed of clocked inverters (only unilateral latch circuits are shown), receive a clock CLK2 from the clock phase adjustment circuit **10** to temporarily hold entered commands or data before outputting them, based on the clock CLK2 and the delayed selector signal.

When the commands or the data have variations in output timing, the clock phase adjustment circuit **10** adjusts the timings. In addition to the receipt of the clock CLK1 via the clock line **5a**, the clock phase adjustment circuit **10** gets feedback of the clock CLK2 via the clock line **5b**, analyzes the status of the clock CLK2 to adjust the phase of the clock CLK1 based on the analysis, and outputs the phase-adjusted clock CLK1 as the clock CLK2. The clock CLK2 is used to determine the operating timings of the latch circuits **9a** to **9c**, and to adjust the timings to output commands from the master chip **1** to the slave chips **2a** to **2c**.

The latch circuits **9a** to **9c** are controlled by the clock CLK2 outputted from the clock phase adjustment circuit **10** and the selector signals Sa, Sb and Sc from the determination circuit **7**. When the selector signal is high, the latch circuits **9a** to **9c** capture signals transmitted from the selector circuit **8** or the slave chips **2a** to **2c**. This approach can both activate the selector circuit **8** and adjust the timing of signal transmission, which enables the control of the signals between the selector circuit **8** and the slave chips **2a** to **2c**. The outputs of the latch circuits **9a** to **9c** are transmitted either to the input/output units **6a** to **6c** or to the selector circuit **8**. The latch circuits **9a** to **9c**, which could perform bi-directional transmission of signals, may be provided with the bi-directional latch feature either by a single circuit or by a combination of unilateral latch circuits in reverse directions.

The first, second and third DRAM chips, which are the slave chips **2a** to **2c**, could be provided with a clock phase adjustment function like DDR DRAM or SLDRAM, or a function to use the clock lines as data clocks by folding them. With these functions, the DRAM chips can output data without adjusting the timing with the clock CLK1.

The signal (control command), which is transmitted from the master chip **1** not only to the determination circuit **7** but also to the selector circuit **8**, is also transmitted to the previously-selected slave chip via the bus selected before the transmission of the control command. Therefore, the slave chips **2a** to **2c** are provided with respective determination circuits **19a** to **19c** which do not recognize a command whose first bit is "0" as a command. When the first bit of the command is "1", the determination circuits **19a** to **19c** recognize the command as the command for the slave chips **2a** to **2c**.

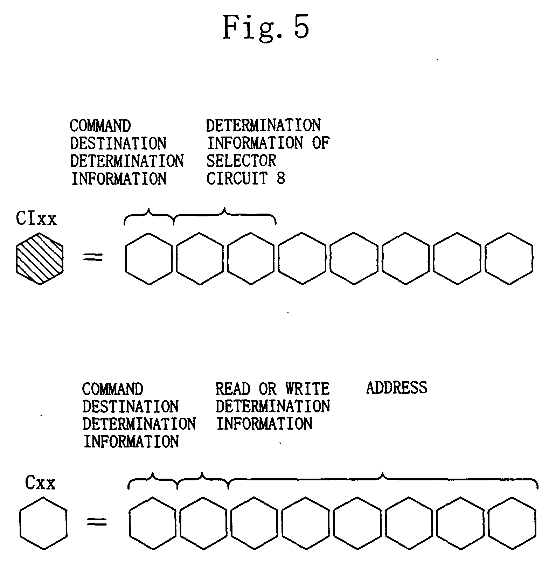

Figure **5** shows an example of the structure of the command packet outputted from the master chip **1**. In the structure, the command packet is composed of eight bits. In the command CIxx, the first bit has destination determination information; the second and third bits have the ID information of the slave chip **2a**, **2b** or **2c**; and the fourth to eighth bits have respective values but no meaning as information. The destination determination information indicates whether the signal is bound for the determination circuit **7** or for the selector circuit **8**. The first bit is "0" when the signal is bound for the determination circuit **7**, and is "1" when for the selector circuit **8**. The ID information indicates which of the three slave chips **2a** to **2c** should be selected, and can be as shown in Figure **3 (c)**, depending on the combinations of the values of the second bit A and the third bit B. In the command Cxx, the first bit has destination determination information, the second bit has information indicating which of data reading and data writing should be performed, and the third to eighth bits have the address information of the data to be read or written.

The number of the higher order bits of the command having the ID information could be larger than 3 in accordance with the number of slave chips or with the way of connecting the buses. In that case, more than one slave chip can be selected to control more slave chips (DRAM chips). In the present embodiment, one slave chip is selected from among the three slave chips **2a** to **2c**; however, increasing the number of the higher order bits of the command containing the ID information enables the concurrent transmission of two or more commands to two or more slave chips.

The behavior of the semiconductor integrated circuit system **110** will be described in detail as follows.

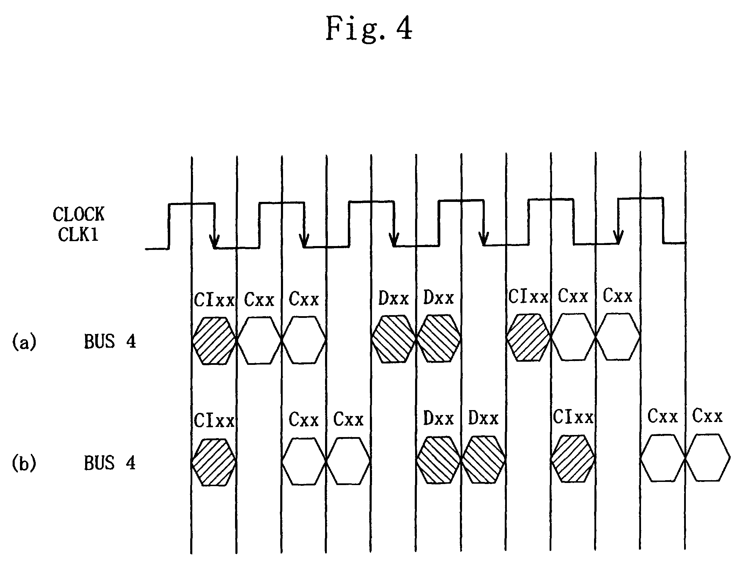

Figure **4** is a schematic diagram showing the data readout timing as an example of the behavior of the semiconductor integrated circuit system **110** shown in Figure **1**. For example, the master chip (CPU) **1** transmits a command to the slave chip (DRAM chip) **2a** to read data therefrom. Assuming that there is an eight-bit bus to carry commands and data, the command from the master chip **1** includes the selection information (command CIxx containing the ID information of a slave chip) to select one bus from among the buses Ba to Bc to the slave chips **2a** to **2c** as the connection information among the chips **1** and **2a** to **2c**, and further includes the readout address (command Cxx not containing the ID information of the slave chip) of the slave chip **2a**. This command is transmitted by the packet mode in synchronization with the clock CLK1 (synchronous with the rise and fall of the clock) as shown in Figure **4**. In Figure **4**, the bus B indicates the propagation of signals on the bus B. As a signal propagating on the bus B, the master chip **1** first outputs the command CIxx, and then transmits a command (readout instruction) to the target slave chip **2a**, which is to be executed therein. After a predetermined process time has passed, the slave chip **2a** transmits the data Dxx to the master chip **1**.

The command signal CIxx containing the ID information and the command Cxx such as a readout address can be transmitted in sequence as shown in Figure **4 (a)**. Alternatively, it is possible as shown in Figure **4 (b)** that the command CIxx is transmitted first and the command Cxx is transmitted in a later time.

The following is a description for one or more of the slave chips **2a** to **2c** to receive a command from the master chip **1**, to execute the command and to output data obtained by the execution (readout process or the like) to the master chip **1** or the remaining ones of the slave chips **2a** to **2c**.

### 1) When the slave chip 2a outputs data to the master chip 1

After the execution of the command from the master chip **1** to the slave chip **2a**, data is transmitted from the slave chip **2a** to the input/output unit **6a** and further to the latch circuit **9a**. The data entered in the latch circuit **9a** is controlled by the clock CLK2 and the selector signal Sa to be outputted to the selector circuit **8**. As described above, the latch circuit **9a** captures data in accordance with the entry of the selector signal Sa (high) so as to activate the switch SWa and to adjust the timing of data transfer. In order to activate the switch SWa, the master chip **1** outputs a command packet containing the ID information of the switch SWa to the determination circuit **7**, which analyzes the command packet and outputs the selector signal Sa for the switch SWa to the selector circuit **8**. The selector signal Sa is also outputted to the latch circuit **9a** at the same time. The data read out in the slave chip **2a** is transferred from the selector circuit **8** to the input/output unit **6**, and further transmitted to the master chip **1**.

### 2) When the slave chips 2a to 2c output data to the master chip 1

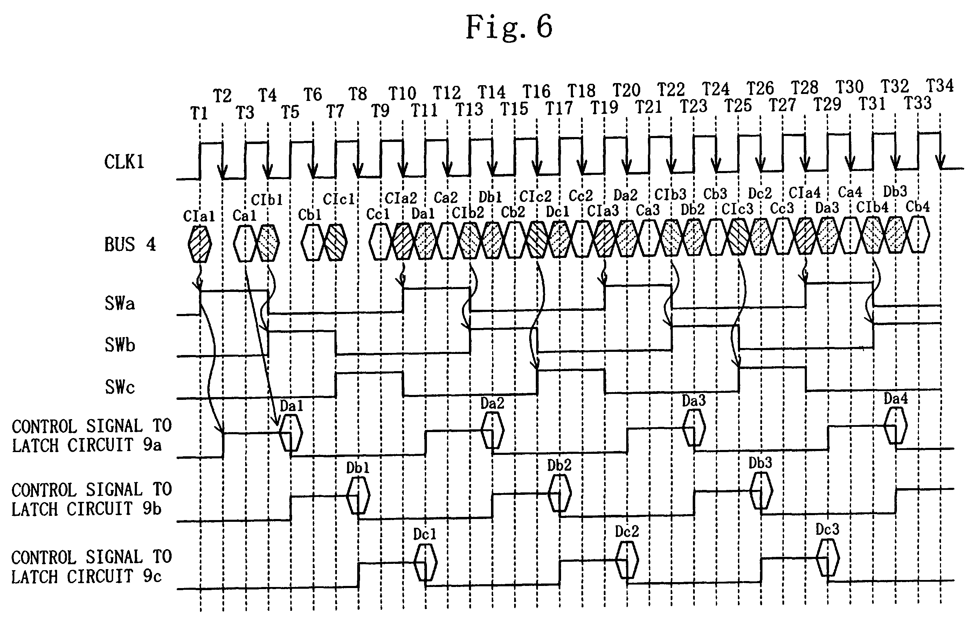

The following is a description of the case where the master chip **1** transmits commands in sequence to the slave chips **2a**, **2b** and **2c** as shown in Figure **6**. In Figure **6**, the bus B indicates the statuses of signals propagating on the bus B.

First of all, at timing T1, the master, chip **1** transmits the command CIa1 containing the ID information of the slave chip **2a** to establish a transmission path to the slave chip **2a**. At timing T3, the master chip **1** transmits a command (for example, readout instruction) Ca1 to the slave chip **2a**. At timing T4, the master chip **1** transmits the command CIb1 containing the ID information of the slave chip **2b** to disconnect the transmission path to the slave chip **2a**, and establishes a transmission path to the slave chip **2b**. At timing T6, the master chip **1** transmits the command Cb1 to the slave chip **2b**. At timings T7 to T9, the same operations follow with the slave chip **2c**. While the operations at timing T4 to T9 are being performed, at timing T5, the slave chip **2a** outputs the data Da1 obtained by the execution of the command Ca1 to the latch circuit **9a** where the data Da1 is temporarily held by a latch control signal C9a.

At timing T10, the master chip **1** transmits the command CIa2 containing the ID information of the slave chip **2a** to establish a transmission path to the slave chip **2a**. At this moment, the determination circuit **7** also transmits the selector signal Sa to the latch circuit **9a**, so that at timing T11, the data Da1 held in the latch circuit **9a** is outputted to the selector circuit **8**. Later, the selector circuit **8** transmits the data Da1 to the master chip **1** via the bus B. In a state of establishment of the transmission path to the slave chip **2a**, at timing T12, the master chip **1** outputs the next command Ca2 to the slave chip **2a**. The same operations follow with the other slave chips **2b** and **2c** at the timings shown in Figure **6**.

As a result of the behavior described hereinbefore, the master chip **1** and the slave chips **2a** to **2c** can transmit and receive commands and data to and from each other so as to control the slave chips **2a** to **2c**. Adjusting the transmission timings of the commands and the data can prevent the coexistence of a command and data on the same bus at the same timing.

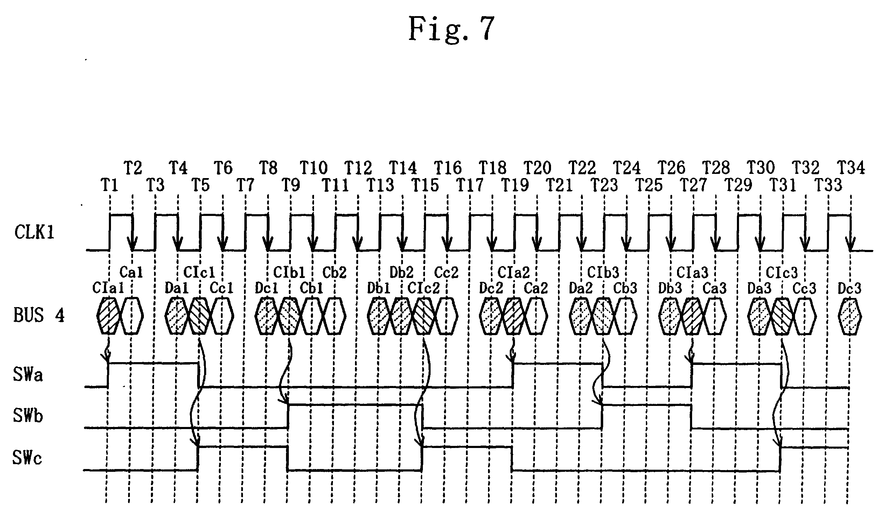

Figure **7** shows the timings when the master chip **1** transmits commands to the slave chips **2a** to **2c** at random. The bus B in Figure **7** indicates the statuses of signals propagating on the bus B. In Figure **7**, the master chip **1** transmits the commands in order of slave chips **2a**, **2c**, **2b**, **2c**, **2a**, **2b**, **2a** and **2c**.

To transmit the command Ca1 to the slave chip **2a**, at timing T1, the master chip **1** outputs the command CIa1 containing the ID information of the slave chip **2a** to activate the switch SWa, thereby to establish a transmission path to the slave chip **2a**. Later, the master chip **1** transmits the command (readout instruction) Ca1 to the slave chip **2a**. The slave chip **2a** receives the command Ca1, executes it and output the data Da1. The switch SWa keeps its state until the data Da1 is transmitted to the master chip **1**. After the receipt of the data Da1, the master chip **1** outputs the command CIc1 containing the ID information of the slave chip **2c** to disconnect the transmission path to the slave chip **2a**. The master chip **1** then establishes a transmission path to the slave chip **2c**, and at timing T6, transmits the command (readout instruction) Cc1 to the slave chip **2c**. The same operations are performed hereinafter.

As a result of the behavior described hereinbefore, the master chip **1** can transmit and receive signals to and from the slave chips **2a** to **2c** at random so as to perform random control of the slave chips **2a** to **2c**. Since the master chip **1** outputs a number of commands while the transmission path is established, commands and data can be transmitted in sequence.

Although it is not described in the present embodiment, changing the ID information of the slave chips **2a** to **2c** to be transmitted to the determination circuit **7** makes it possible not only to connect the master chip **1** and the slave chips **2a** to **2c** but also to connect the slave chips **2a** to **2c** themselves. For example, in the case where the slave chips **2a** to **2c** have a calculation function, the master chip **1** transmits a command packet containing the ID information of the slave chip **2a** to establish a transmission path to the slave chip **2a**, and then transmits a command to the slave chip **2a**. Later, the master chip **1** transmits a command packet containing the ID information connecting the two slave chips **2a** and **2b** so as to establish a transmission path between these slave chips **2a** and **2b**. As a result, the slave chip **2a** can execute the command transmitted from the master chip **1** and transfer the data obtained by the execution to the slave chip **2b** via the established transmission path so that the slave chip **2b** can perform another process, based on the data.

The selector circuit **8** could be provided to each bit of the buses B and Ba to Bc each consisting of plural bits. Signals can be transmitted between the master chip **1** and the slave chips **2a** to **2c** or between the slave chips **2a** to **2c** themselves concurrently by defining the ID information of the slave chips **2a** to **2c** contained in the command packet as follows. For example, the first bit, the second bit and the third bit of the bus B to the master chip **1** can be respectively connected with the first bit of the bus Ba for the slave chip **2a**; the second bit of the bus Bb for the slave chip **2b**; and the third bit of the bus Bc for the slave chip **2c**.

### EMBODIMENT 2

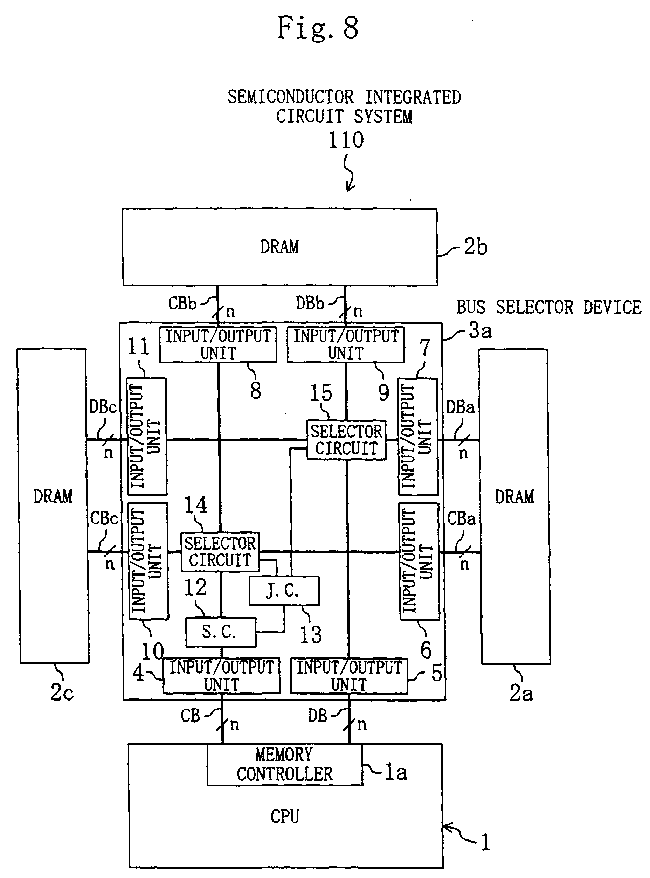

Figure **8** shows the semiconductor integrated circuit system **110** of the second embodiment of the present invention. While the first embodiment uses the single buses B and Ba to Bc having a predetermined bit width in connecting the chips **1** and **2a** to **2c** with the bus selector device **3**, the present embodiment uses two buses: a data bus and a command bus, and the switching information of the buses is transmitted via the command bus to the bus selector device **3**.

In the semiconductor integrated circuit system **110** shown in Figure **8**, the bus selector device **3a** is surrounded by four chips **1**, **2a**, **2b** and **2c** arranged at the same distance from the device **3a**. This arrangement is identical to that of the semiconductor integrated circuit system **110** of the first embodiment. The master chip **1** is connected to the bus selector device **3a** via the two buses, that is, the command bus CB and the data bus DB each having a width of plural bits (n bits) to carry commands and data, respectively. The slave chips **2a** to **2c** are also connected to the bus selector device **3a** via command buses CBa to CBc and data buses DBa to DBc to carry commands and data. The command bus CB which connects the master chip **1** and the bus selector device **3a** is also used as a connection information bus to carry connection information indicating the connection of the chips **1** and **2a** to **2c**.

In Figure **8**, the bus selector device **3a** comprises an input/output unit **4** which transmits and receives commands to and from the master chip **1** via the command bus CB that is a transmission path having a width of plural bits; a destination selection circuit (destination selection means) **12** which receives a command from the input/output unit **4**, analyzes the command to determine whether it contains the connection information among the slave chips **2a** to **2c** and selects the destination in accordance with the analysis results; a determination circuit (determination means) **13** which receives the command from the destination selection circuit **12**, analyzes the connection information among the slave chip **2a** to **2c** and outputs the analysis results (selector signal); a command bus selector circuit **14** which is arranged on a point of intersection of the command buses CB and CBa to CBc connecting the master chip **1** with the slave chips **2a** to **2c**; and a data bus selector circuit **15** which is arranged on a point of intersection of the data buses DB and DBa to DBc connecting the master chip **1** with the slave chips **2a** to **2c**. Upon receipt of the analysis results from the determination circuit **13**, the command bus selector circuit **14** and the data bus selector circuit **15** switch and select among the command buses and the data buses, respectively, between the master chip **1** and the slave chips **2a** to **2c** or between the slave chips **2a** to **2c** themselves.

The bus selector device **3a** further comprises input/output units (control signal input means and control signal output means) **6**, **8** and **10** for the inputting and outputting commands, and input/output units (data input means and data output means) **5**, **7**, **9** and **11** for the inputting and outputting of data. The input/output units **6**, **8** and **10** receive commands from the master chip **1** through the command bus selector circuit **14** and output them to the slave chips **2a** to **2c** via the command buses CBa to CBc. The input/output units **7**, **9** and **11** transmit and receive data, which have been transmitted to or received from the slave chips **2a** to **2c**, to and from the data bus selector circuit **15** via the data buses DBa to DBc. The input/output unit **5** receives data from the slave chips **2a** to **2c** through the data bus selector circuit **15** and outputs them to the master chip **1** via the data bus DB.

As described above, the command bus selector circuit **14** and the data bus selector circuit **15** are arranged on a point of intersection of the command buses CB and CBa to CBc and on a point of intersection of the data buses DB and DBa to DBc connecting the master chip **1** and the slave chips **2a** to **2c**; however, these circuit **14** and **15** could be arranged differently. For example, in addition to the command bus selector circuit **14** and the data bus selector circuit **15**, it is possible to arrange additional bus selector circuits on a point of intersection of the command buses CB, CBb and the data buses DBa, DBc and on a point of intersection of the command buses CBa, CBc and the data buses DB, DBb. In this structure, data outputted from the slave chip **2a** via the data bus DBa can be entered to the slave chip **2b** as a command via the command bus CBb, thus enabling the chips **1** and **2a** to **2c** share commands and data with each other. The numerical structure of the master chip and the slave chips in the semiconductor integrated circuit system could be appropriately determined.

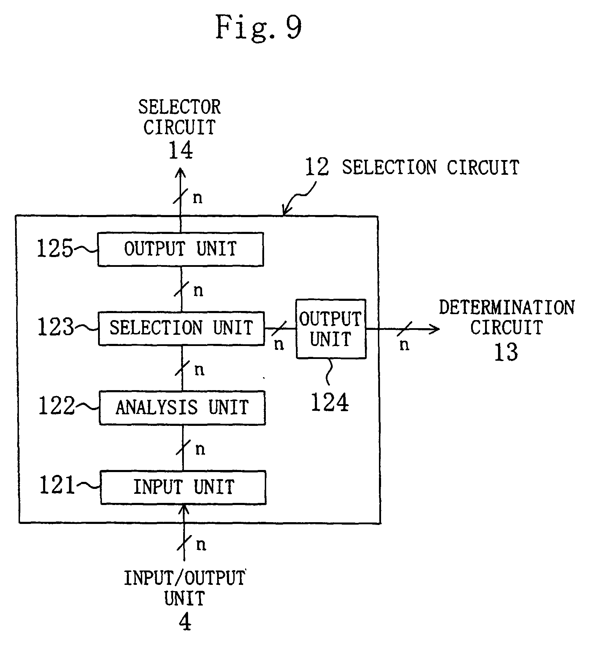

As shown in Figure **9**, the destination selection circuit **12** shown in Figure **8** comprises an input unit **121** which receives commands from the input/output unit **4**; an analysis unit **122** which analyzes the commands to determine whether the commands contain the connection information among the slave chips **2a** to **2c**; a selection unit **123** which selects between the determination circuit **13** and the command bus selector circuit **14** shown in Figure **8** to transmit the commands in accordance with the analysis results; and output units **124**, **125** which output commands respectively to the determination circuit **13** and the command bus selector circuit **14**.

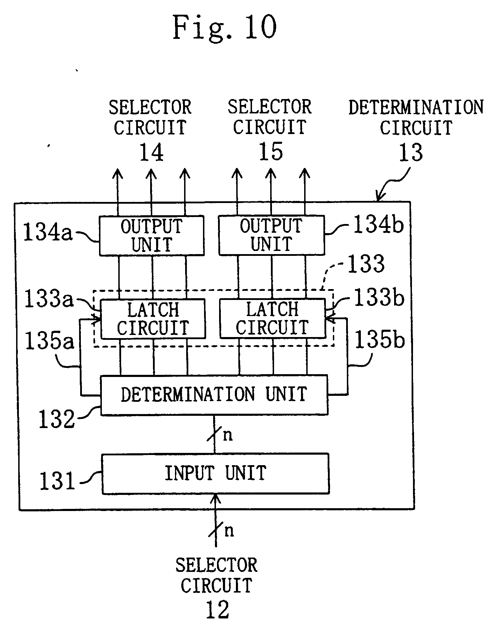

As shown in Figure **10**, the determination circuit **13** shown in Figure **8** comprises an input unit **131** which receives commands from the destination selection circuit **12** shown in Figure **8**, a determination unit **132** which analyzes the commands and generates selector signals selecting at least one of the command bus selector circuit **14** and the data bus selector circuit **15**; a latch unit **133** composed of two latch circuits **133a**, **133b** which hold the statuses of the selector signals received from the determination unit **132** until the next selector signals are entered; and output units **134a**, **134b** which output the selector signals received from the latch circuits **133a**, **133b** of the latch unit **133** to the command bus selector circuit **14** and the data bus circuit **15**, respectively.

The determination unit **132** and the latch unit **133** are connected with each other via control lines **135a** and **135b**. Besides transmitting the selector signals bound for the command bus selector circuit **14** and the data bus selector circuit **15**, the control lines **135a** and **135b** carry control commands which control the latch circuits **133a** and **133b**. The latch circuits **133a** and **133b** are controlled by the control commands from the determination unit **132**. For example, when the control lines **135a** and **135b** receive control commands "0" (low) and "1" (high), respectively, the latch circuit **133a** keeps the status of the previous signal without receiving the selector signal from the determination circuit **132**, while the latch circuit **133b** receives the selector signal and transfers it to the data bus selector circuit **15**. When the control lines **135a** and **135b** both receive control commands "1", the latch circuits **133** and **133b** output entered selector signals to the command bus circuit **14** and the data bus circuit **15**, respectively. The control commands can be used to select the destination of the selector signals and to adjust their timings.

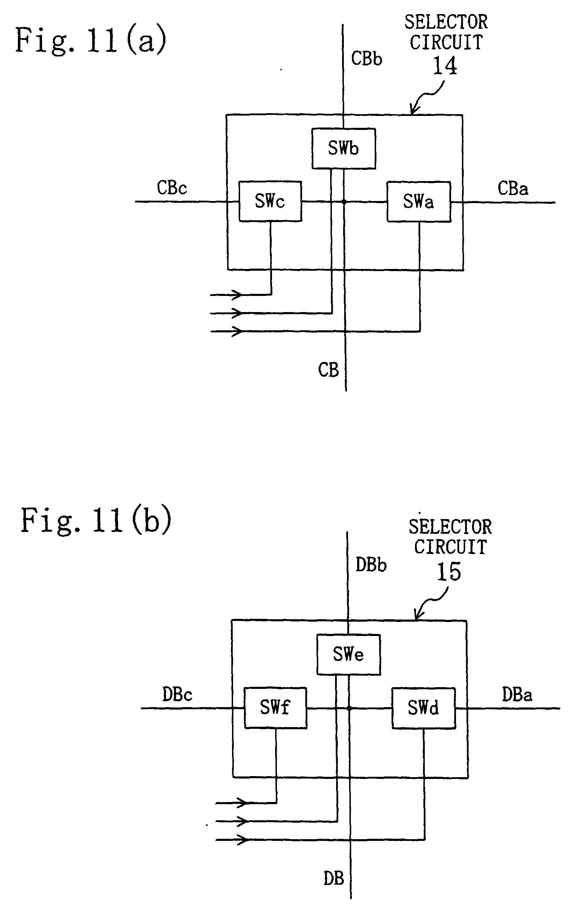

The command bus selector circuit **14** and the data bus selector circuit **15** are arranged on a point of intersection of the command buses CB and CBa to CBc and on a point of intersection of the data buses DB, DBa to DBc as shown in Figure **8**. These circuits **14** and **15** comprise selector switches SWa to SWf shown in Figures **11 (a)** and **11 (b)** which are arranged respectively on the command buses CB and CBa to CBc and the data buses DB and DBa to DBc connecting the master chip **1** and the slave chips **2a** to **2c**. The selector switches SWa to SWf are switched by the selector signals transmitted from the determination unit **132**.

Before the description of the behavior of the semiconductor integrated circuit system **110**, the structure of the command packet involved in the behavior of the system **110** will be described as follows.

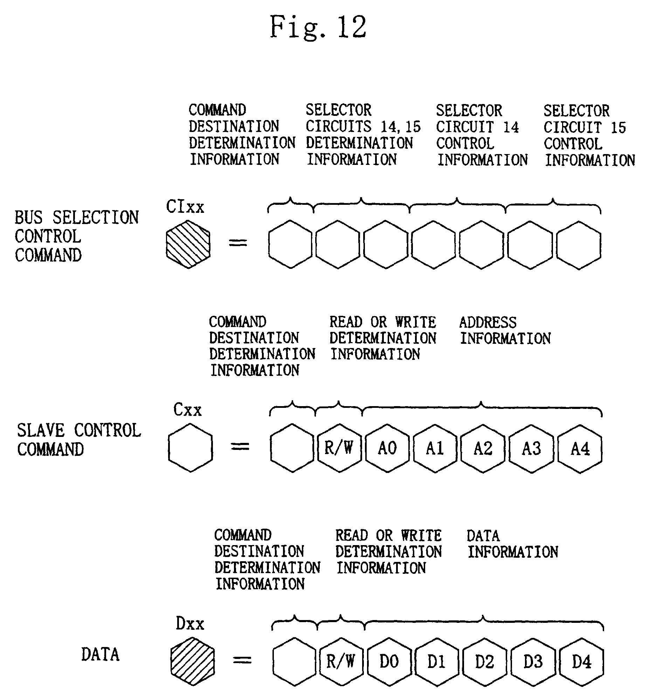

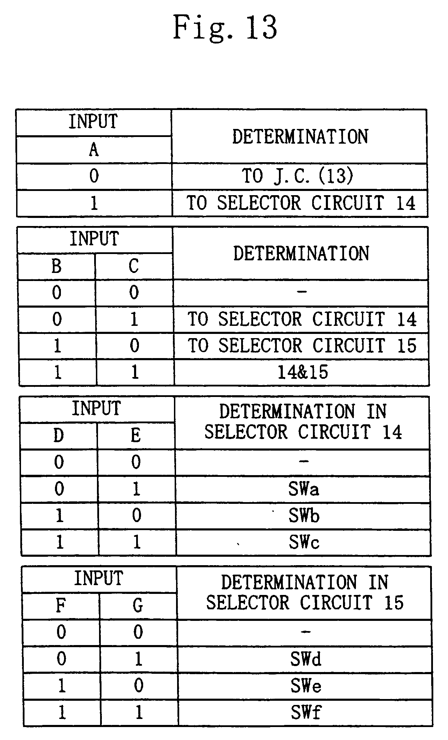

Figure **12** shows the rough structure of the command packet used in the present embodiment, and Figure **13** shows the determination results of the determination circuit **13** for the entered commands shown in Figure **12**. Assume that each of the command buses CB and CBa to CBc and the data buses DB and DBa to DBc which carry commands and data has a bus width of 7 bits. The bus width could be changed if necessary.

In the command packet shown in Figure **12**, the bus selection control command CIxx consists of the first bit having destination information indicating which is the destination of the command between the command bus selector circuit **14** and the determination circuit **13**; the second and third bits having information indicating which should be controlled between the command bus selector circuit **14** and the data bus selector circuit **15**; the fourth and fifth bits having control information for the command bus selector circuit **14**; and the sixth and seventh bits having control information for the data bus selector circuit **15**. The slave control command Cxx consists of the first bit having the destination information; the second bit having operating information indicating either data reading or data writing; and the third through seventh bits having address information of the data to be either read or written. The data Dxx consisting of the first bit having the destination information; the second bit having operating information indicating either data reading or data writing; and the third to seventh bits having data to be written. The values of these bits and the determination results of the determination circuit **13** are shown in Figure **13**.

The destination selection circuit **12** shown in Figure **8** detects the first bit (A) of each of the bus selection control command CIxx and the data Dxx, determines whether the command contains the connection information among the slave chips (A=0) or does not (A=1), and selects the determination circuit **13** when the command contains the connection information, and selects the command bus selector circuit **14** when it does not. The remaining bits of the command and the data are used in the selected circuit. In this circuit selection, assume that the initial setting state is A=1. Therefore, unless the state becomes A=0, the command is outputted to the command bus selector circuit **14**, while ignoring the destination selection circuit **12**. The provision of the initial setting state can eliminate the need for the analysis in the determination circuit **13** for each command when commands are transmitted continuously to the command bus selector circuit **14**. This realizes smooth command transmission. The analysis of each command will be described as follows with reference to Figures **12** and **13**.

### (1) When A=0

In Figure **8**, the destination selection circuit **12** outputs a command to the determination circuit **13**. In the determination circuit **13**, the determination unit **132** analyzes the combination of the second and third bits (B, C) of this command, and generates a control command to be transmitted to the latch circuits **133a**, **133b** so as to control the transmission of the determination signal from the determination circuit **13** to one or both of the command bus selector circuit **14** and the data bus selector circuit **15**.

The determination unit **132** of the determination circuit **13** analyzes the command to determine the fourth and fifth bits (D, E) and the sixth and seventh bits (F, G) of the command so as to generate a signal which controls the switching of at least one of the command bus selector circuit **14** and the data bus selector circuit **15**.

### (2) When A=1

The second to seventh bits of the command become the command for the selected slave chip. The division and combination of these bits and the bus width can be changed if necessary.

The behavior of the semiconductor integrated circuit system **110** will be described in detail as follows.

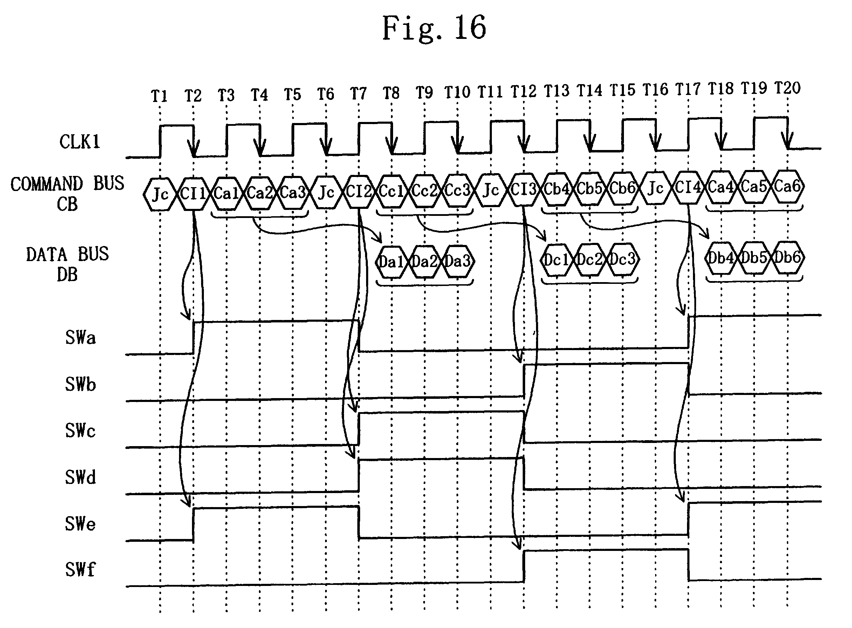

Figure **16** schematically shows as an example of the behavior of the semiconductor integrated circuit system **110** in Figure **8**, the readout timing involving the transmission of commands from the master chip (CPU) **1** to the slave chips **2a**, **2b** and **2c** (DRAM chips) via the command bus CB, the execution of the commands in the corresponding slave chips **2a** to **2c**, and the output of the obtained data to the master chip **1** via the data bus DB.

In Figure **16**, CLK1 indicates a clock; the command bus CB and the data bus DB indicate the statuses of signals on the command bus CB and the data bus DB shown in Figure **8**; and SWa to SWf indicate the connection conditions of the selector switches SWa to SWf shown in Figures **11 (a)** and **11 (b)**. Here, high and low mean ON and OFF, respectively.

First, at timing T1, the master chip **1** outputs the control command JC in order to make the determination circuit **13** shown in Figure **8** the destination of the command. Assume that all bits of the control command JC are "0". Since the first bit of this command is "0", the determination circuit **13** is selected as the destination of the command, based on the determination results shown in Figure **13**.

At timing T2, the master chip **1** outputs the command CI1 containing the connection information among the slave chips **2a** to **2c**, and the determination circuit **13** analyzes the command CI1 to determine the bit values. The determination results in the determination circuit **13** indicate that the second and third bits of the command both have a value "1", so that the command bus selector circuit **14** and the data bus selector circuit **15** are both controlled. Since the fourth and fifth bits have values "0" and "1", respectively, and the sixth and seventh bits have values "1" and "0", respectively, the determination circuit **13** generates and outputs the selector signals which make the switch SWa of the command bus selector circuit **14** and the switch SWe of the data bus selector circuit **15** both on. By the selector signal outputted to make the switch SWa of the command bus selector circuit **14** on, the connection of the command bus CB between the command bus selector circuit **14** and the slave chip **2a** is established.

At timings T3 to T5, the master chip **1** transmits the commands Ca1 to Ca3 to the slave chip **2a**. The command Ca1 whose first (most significant) bit is "1" passes through the destination selection circuit **12** on the command bus CB and is transferred to the command bus selector circuit **14** without being processed in the determination circuit **13**. This is because the initial setting state in the destination selection circuit **12** is A=1. These operations make the command transmission highly efficient.

When the master chip **1** generates a request to transmit a command to the slave chip **2c**, the master chip **1** again outputs the command JC to the destination selection circuit **12** via the command bus CB at timing T6 in order to change the connection of the destination selection circuit **12**. As a result, the destination of the command is switched to the determination circuit **13**. At timing T7, the master chip **1** transmits the command CI2 containing the connection information of the chips **1** and **2a** to **2c** to make the switch SWc on and the switch SWa off in the command bus selector circuit **14**, thereby to switch the connection of the command bus CB.

At timings T8 to T10, the master chip **1** transmits the commands Cc1 to Cc3 to the slave chip **2c**. At the same time, the master chip **1** takes in the data Da1 to Da3 obtained in the slave chip **2a** at timing T7 by making the switches SWd and SWe of the data bus selector circuit **15** on and off, respectively, so as to switch the connection of the data bus DB.

By the repetition of these operations, the master chip **1** and the slave chips **2a** to **2c** can transmit and receive command and data to and from each other. When it is desired to transmit a command or to take data in, the master chip **1** can transmit the control command JC and the command containing the connection information to switch the connection of the bus, thereby to control the transmission of commands and data to and from the slave chips **2a** to **2c**.

### EMBODIMENT 3

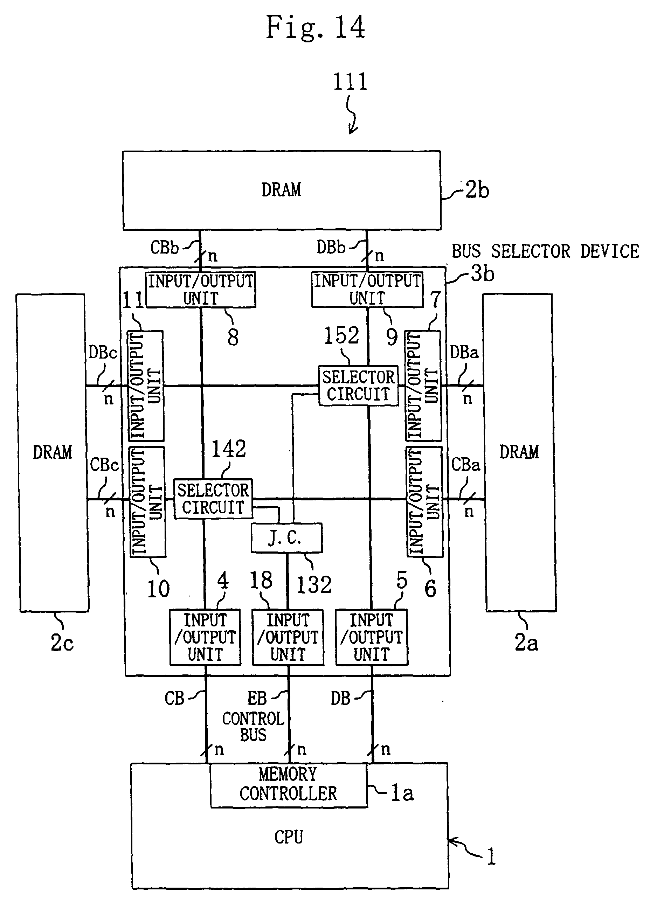

Figure **14** is a block diagram showing the semiconductor integrated circuit system **111** of the third embodiment of the present invention.

The feature of the present embodiment is that the master chip **1** and the bus selector device **3b** are connected with each other via a control bus EB which is a connection information bus designed specifically to carry the command containing connection information among the chips **1** and **2a** to **2c**.

As shown in Figure **14**, the master chip **1** and the bus selector device **3b** are connected with each other via a command bus CB and a data bus DB each having a width of plural bits to carry commands and data, and also via the control bus EB having a width of plural bits to carry the command containing the connection information among the chips **1** and **2a** to **2c**. Similarly, the slave chips **2a** to **2c** and the bus selector device **3b** are connected with each other via the command buses CBa to CBc and the data buses DBa to DBc to carry commands and data.

In Figure **14**, the bus selector device **3b** comprises input/output units **4** and **18** which transmit and receive commands via the command bus CB and the control bus EB, respectively, each of which is composed of a transmission path having a width of plural bits; a determination circuit (determination means) **132** which receives the commands from the input/output unit **18**, analyzes the connection information among the chips **1** and **2a** to **2c** to determine the bit values, and outputs the determined results; a command bus selector circuit **142** arranged on a point of intersection of the command buses CB and CBa to CBc which connect the master chip **1** and the slave chips **2a** to **2c**; and a data bus selector circuit **152** arranged on a point of intersection of the data buses DB and DBa to DBc which connect the master chip **1** and the slave chips **2a** to **2c**. The command bus selector circuit **142** and the data bus selector circuit **152** receive the determination results from the determination circuit **132**, switch the connection of the command buses and the data buses, based on the determination results, and connect the master chip **1** with the slave chips **2a** to **2c**, and the slave chips **2a** to **2c** themselves.

In addition to the above-mentioned input/output unit (control command input means) **4** which transmits and receives commands (control commands) to control the slave chips **2a** to **2c** to and from the master chip **1** via the command bus CB and the input/output unit **18** which transmits and receives commands (hereinafter referred to as connection commands) containing connection information among the chips **1** and **2a** to **2c** to and from the master chip **1** via the control bus EB, the bus selector device **3b** further comprises input/output units (control command output means) **6**, **8** and **10** which receive the control commands from the master chip **1** and output them via the command bus selector circuit **142** to the slave chips **2a** to **2c**; input/output units (data input means and data output means) **7**, **9** and **11** which transmit and receive data outputted from the slave chips **2a** to **2c** to and from the selector circuit **152** via the data buses DBa to DBc; and an input/output unit (data output means) **5** which receives data from the slave chips **2a** to **2c** through the data bus selector circuit **152** and transmits the data to the master chip **1** via the data bus DB.

As mentioned above, the command bus selector circuit **142** and the data bus selector circuit **152** are arranged on a point of intersection of the command buses CB and CBa to CBc and on a point of intersection of the data buses DB and DBa to DBc, respectively, which connect the master chip **1** and the slave chips **2a** to **2c**. However, the arrangement of the two circuits is not restricted to the one used in the present embodiment. For example, beside the point of intersection of the command buses and the point of intersection of the data buses, additional selector circuits could be arranged on each point of intersection of the command buses and the data buses. This structure enables the chips **1** and **2a** to **2c** share commands and data with each other as described in the second embodiment.

The determination circuit **132**, the command bus selector circuit **142** and the data bus selector circuit **152** shown in Figure **14** have the same structures as the determination circuit **13**, the command bus selector circuit **14** and the data bus selector circuit **15** shown in the second embodiment.

Before the description of the behavior of the semiconductor integrated circuit system **111**, the structure of the command packet involved in the behavior of the system **111** will be described as follows.

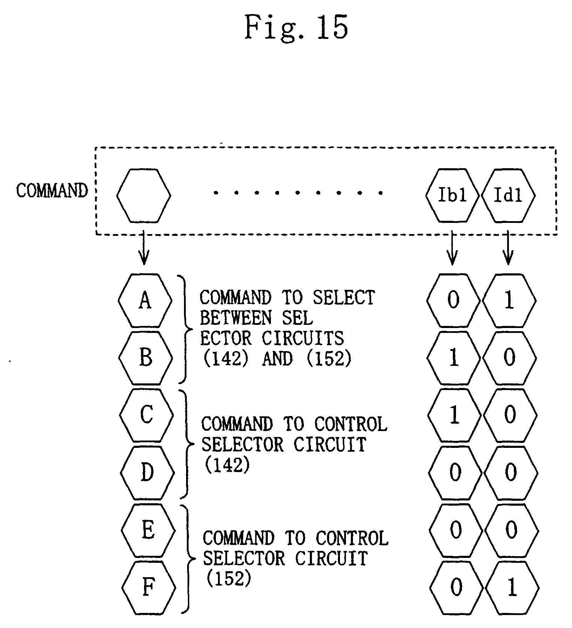

Figure **15** shows a rough structure of the command packet containing connection information among the chips used in, the present embodiment. Assume that the control bus EB which carries a command has a bus width of 6 bits. The command buses CB and CBa to CBc and the data buses DB and DBa to DBc each have a bus width of n bits (n is an arbitrary value).

The structure of the command packet will be described as follows with reference to Figure **15**. The determination unit **132** determines tile combination of the first and second bits (A, B) of the command, and generates a control command to control the latch circuits **133a**, **133b** thereby to select between the command bus selector circuit **142** and the data bus selector circuit **152** as the destination of the determination signal outputted from the determination circuit 13. The determination unit **132** also analyzes the third and fourth bits (C, D) and the fifth and sixth bits (E, F) of the command to determine their values, and generates a selector signal which selects at least one of these circuits **142**, **152**. The combination and contents of the values of the first through sixth bits are not described here again because they are identical to those shown in Figure **13** in the second embodiment. The division and combination of these bits and the bus width can be changed if necessary.

The behavior of the semiconductor integrated circuit system **111** will be described in detail as follows.

Figure **17** schematically shows as an example of the behavior of the semiconductor integrated circuit system **111** in Figure **14**, the readout timing involving the transmission of commands from the master chip (CPU) **1** to the slave chips **2a**, **2b** and **2c** (DRAM chips) via the command bus CB, the execution of the commands in the corresponding slave chips **2a** to **2c** and the output of the obtained data to the master chip **1** via the data bus DC. The master chip **1** transmits the command containing the connection information among the chips **1** and **2a** to **2c** to the bus selector device **3b** via the control bus EB.

In Figure **17**, CLK1 indicates a clock; the command bus CB, the data bus DB and the control bus EB indicate the statuses of signals on the command bus CB, the data bus DB and the control bus EB; and SWa to SWf indicate the connection conditions of the selector switches SWa to SWf shown in Figures **11 (a)** and **11 (b)**.

First, as for the operations at timings T1 to T4, assume that the command buses CB and CBa between the master chip **1** and the slave chip **2a** are connected by the selector signal of the determination circuit **132**. The commands C1 to C4 existing on the command bus CB in this condition are transmitted from the master chip **1** to the slave chip **2a** via the command buses CB and CBa.

When generating a command transmission request to the slave chip **2b**, the master chip **1** transmits the commands Ib1, Id1 (refer to Figure **15**) containing the connection information among the chips **1** and **2a** to **2c** to the determination circuit **132** via the control bus EB at timings T4 and T5 in order to establish each connection of the command bus CBb to the slave chip **2b** and of the data bus DBa to the slave chip **2a**. The determination circuit **132** analyzes the commands Ib1 and Id1, and outputs the selector signals to the command bus selector circuit **14** and the data bus selector circuit **15**. At timing T5, the master chip **1** makes the switches SWa and SWb shown in Figure **11 (a)** off and on, respectively, to establish the connection of the command buses CB and CBb between the master chip **1** and the slave chip **2b**. At timing T6, the master chip **1** makes the switches SWf and SWd shown in Figure **11 (b)** off and on, respectively, to establish the connection of the data buses DB and DBa between the master chip **1** and the slave chip **2a**.

At timings T6 to T9, the master chip **1** shown in Figure **14** outputs the commands C5 to C8 to the slave chip **2b** via the command bus CB. At timings T7 to T10, the master chip **1** takes in the data D1 to D4 from the slave chip **2a** via the data bus DB.

By the repetition of these operations, the master chip **1** can transmit and receive command and data to and from the slave chips **2a** to **2c**, while switching the bus connections. When it is desired to transmit a command or to receive data, the master chip **1** can transmit the command containing the connection information to control the transmission of commands and data between the master chip **1** and the slave chips **2a** to **2c**.

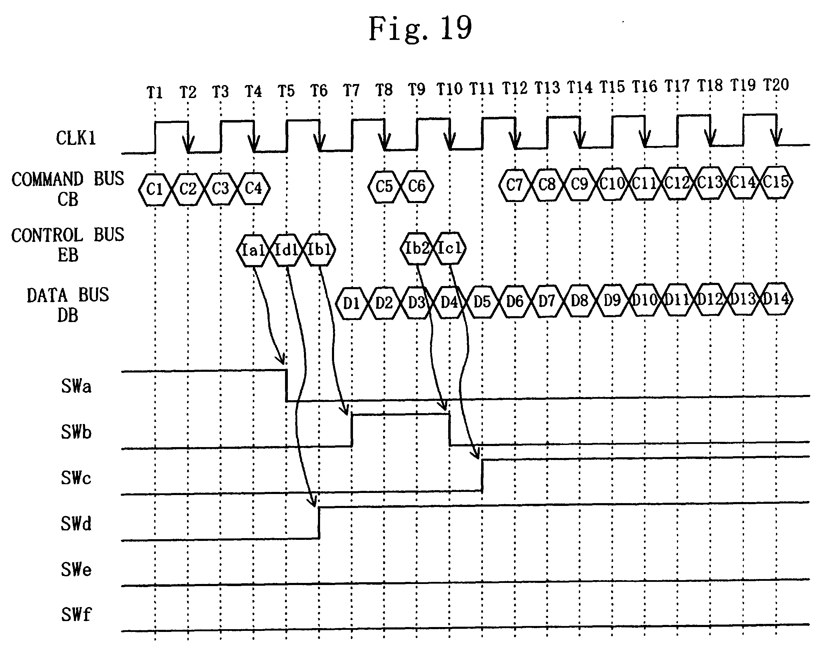

Figure **19** schematically shows as an example of the behavior of the semiconductor integrated circuit system **111** shown in Figure **14**, the timing when the master chip (CPU) **1** transmits commands to the slave chips **2a**, **2b** and **2c** (DRAM chips) via the command bus CB, while the slave chip **2a** is outputting data to the master chip **1** via the data bus DC. The master chip **1** also transmits the command containing the connection information among the chips **1** and **2a** to **2c** to the bus selector device **3b** via the control bus EB.

First, as for the operations at timings T1 to T4, assume that the command buses CB and CBa between the master chip **1** and the slave chip **2a** are connected by a selector signal from the determination circuit **132**. The commands C1 to C4 existing on the command bus CB in this condition are transmitted from the master chip **1** to the slave chip **2a**.

At timing T4, the master chip 1 outputs the command Ia1 which makes the switch SWa off via the control bus EB. At timing T5, the master chip **1** outputs the command Id1 via the control bus EB in order to connect the data buses DBa and DB. After the establishment of the bus connection, the slave chip **2a** outputs the data D1 to D14 to the master chip **1** via the data bus DB. During this transmission, the status of the selector switch SWd is held by the latch circuit **133b**. At timing T6, the master chip **1** outputs the command Ib1 on the control bus EB to make the switch SWb on, thereby to establish the connection between the command buses CB and CBb.

At timings T8 and T9, the master chip **1** outputs the commands C5 and C6 to the slave chip **2b**. At the same timing T9, the master chip **1** outputs the command IB2 via the control bus EB in order to disconnect the connection between the command buses CB and CBb.

At timing T10, the master chip **1** outputs the command Ic2 to the slave chip **2c** via the control bus EB to establish the connection between the command buses CB and CBc. At timing T12 and the subsequent timings, the master chip **1** transmits the commands C7 to C15 to the slave chip **2c**.

Through these operations, the master chip **1** can enter data continuously, while transmitting commands to the slave chips **2a** to **2c**.

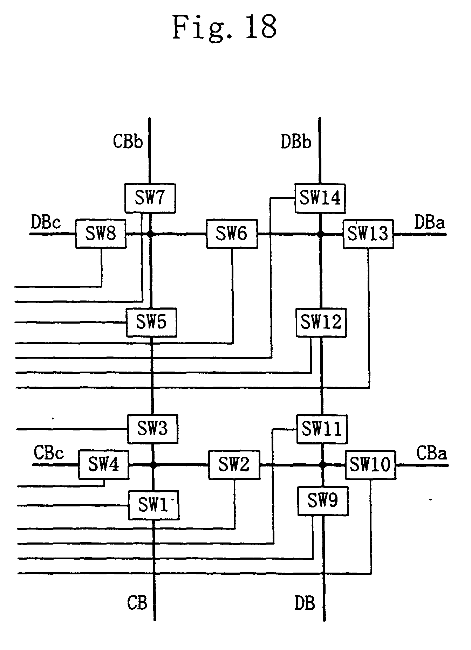

Although it is not described in the present embodiment, not only the connection between the master chip **1** and the slave chips **2a** to **2c** but also the connection among the slave chips **2a** to **2c** themselves can be achieved by modifying the command bus selector circuit **142** and the data bus selector circuit **152** in such a manner as to arrange switches SW1 to SW14 on the command bus CB and the data bus DB as shown in Figure **18** and by transmitting the selector signals from the determination circuit **132** to control these switches SW1 to SW14.

For example, when the slave chips **2a** to **2c** shown in Figure **14** have a calculation function, the master chip **1** first outputs a command to connect the command buses CB and CBa to the determination circuit **132** via the control bus EB so as to establish the connection between the command buses CB and CBc. Later, the master chip **1** transmits a command to the slave chip **2c** via the command buses CB and CBc. The slave chip **2c** executes the command. Before the slave chip **2c** outputs the data obtained by the excursion of the command via the data bus DBc, the master chip **1** outputs a command which connects the data bus DBc and the command bus CBb to the determination circuit **132**. The determination circuit **132** analyzes the command to determine the bit values, and outputs selector signals to make the switches SW7 and SW8 shown in Figure **18** on. As a result, the connection between the data bus DBc and the command bus CBb of the slave chips **2c** and **2b** is established to transmit data from the slave chip **2c** to the slave chip **2b**. Alternatively, the slave chip **2b** can receive the data as a command to perform another process. Switching the bus connections in this manner can make the chips **1** and **2a** to **2c** share commands and data, which is effective for the execution of a program required plural processes.

### EMBODIMENT 4

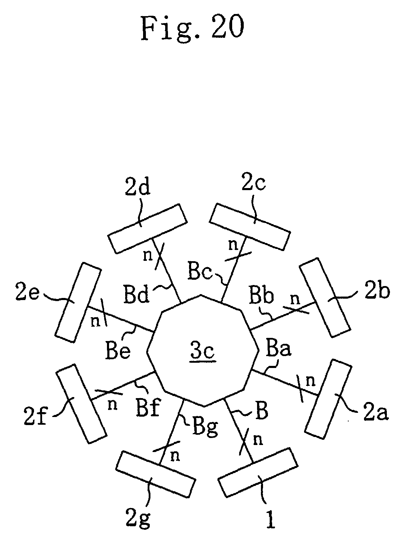

Figure **20** shows the fourth embodiment of the present invention. As shown in the drawing, the semiconductor integrated circuit system comprises a master chip **1**, seven slave chips **2a** to **2g**, and a bus selector device **3c**. Similar to the first to third embodiments, the bus selector device **3c** is provided independently of the master chip **1** and arranged substantially at the same distance from the seven slave chips **2a** to **2g** and the master chip **1**. Consequently, the buses Ba to Bg which connect the respective slave chips **2a** to **2g** and the bus selector device **3c**, and the bus B which connects the master chip **1** and the bus selector device **3c** have approximately the same length and are shorter than those in the first to third embodiments.

In the present embodiment, signals transmitted among the buses have very few variations in transmission delay, which enables high-speed transmission of commands and data among the eight chips **1** and **2a** to **2g**.

As described hereinbefore, in the present invention, the bus selector device is provided independent of the master chip to reduce the number of pins in the master chip. Furthermore, the arrangement of the bus selector device can be freely determined, so that the device can be arranged substantially at the same distance from the slave chips to make the bus length from the master chip to each slave chip equal and short. As a result, data transmission among the master chip and the slave chips can be performed at high speed while storing large amounts of data in the slave chips.

## Claims

1. A semiconductor integrated circuit system having a plurality of chips and making said plurality of chips transmit and receive signals to and from each other, comprising:
a bus selector device connected to said plurality of chips via a plurality of buses,
said bus selector device receiving connection information among said plurality of chips and selecting among connections of said plurality of buses in accordance with the connection information.

2. The semiconductor integrated circuit system of claim 1, wherein said bus selector device comprises:
switch means for switching among the connections of said plurality of buses; and
determination means for determining the connection information among said plurality of chips received, and for outputting a switch signal in accordance with determination results to said switch means.

3. The semiconductor integrated circuit system of claim 1, wherein said bus selector device comprises:
latch means for holding signals to be transmitted to or received from said plurality of chips to adjust timings of signal transmission and reception.

4. The semiconductor integrated circuit system of claim 1, wherein said plurality of chips include at least one master chip and a plurality of slave chips.

5. The semiconductor integrated circuit system of claim 4, wherein
said master chip outputs the connection information among said plurality of chips to said bus selector device; and
said master chip and said bus selector device are connected to each other with a single bus, said single bus carrying the connection information among said plurality of chips.

6. The semiconductor integrated circuit system of claim 4, wherein
said master chip outputs the connection information among said plurality of chips to said bus selector device; and
said master chip and said bus selector device are connected to each other with two or more buses, one of said two or more buses carrying the connection information among said plurality of chips.

7. The semiconductor integrated circuit system of claim 6, wherein
said two or more buses include a command bus, said command bus being also used as a connection information bus to carry the connection information among said plurality of chips.

8. The semiconductor integrated circuit system of claim 6, wherein
said one of said two or more buses to carry the connection information among said plurality of chips is a specifically designed connection information bus.

9. The semiconductor integrated circuit system of claim 1, wherein the connection information among said plurality of chips is composed of a packet.

10. A semiconductor integrated circuit system having at least a master chip and a plurality of slave chips, comprising:
a bus selector device which is connected to said master chip and said plurality of slave chips with a plurality of buses and which selects among connections of said plurality of buses,
said bus selector device being arranged substantially at a same distance from said plurality of slave chips.

11. The semiconductor integrated circuit system of claim 10, wherein
said bus selector device is arranged substantially at a same distance from said master chip and said plurality of salve chips.

12. The semiconductor integrated circuit system of claim 10, wherein
said plurality of slave chips are memory.

13. A bus selector device connected to a plurality of chips with a plurality of buses and selecting among connections of said plurality of buses, comprising:
switch means for switching among said connections of said plurality of buses; and
determination means for receiving and determining connection information among said plurality of chips, and for outputting a switch signal in accordance with determination results to said switch means.

14. The bus selector device of claim 13 further comprising:
control signal input means for receiving a control signal from one of said plurality of chips for another chip; and
control signal output means for outputting said control signal to at least one of said plurality of chips through one of said plurality of buses selected by switching of said switch means.

15. The bus selector device of claim 13 further comprising:
data input means for receiving data from one of said plurality of chips; and
data output means for outputting said data to at least one of said plurality of chips through one of said plurality of buses selected by switching of said switch means.

16. The bus selector device of claim 15 further comprising:
a plurality of internal buses connected to said plurality of buses, said plurality of internal buses each being provided with latch means.
